# EUROPEAN PATENT APPLICATION

(11) **EP 1 139 200 A2**
(43) Date of publication of application: **04.10.2001**
(21) Application number: 01302676.0
(22) Date of filing: 22.03.2001
(51) Int. Cl.: G06F 1/00, G07C 9/00

(54) **Access code generating system including smart card and smart card reader**

(30) Priority: 23.03.2000 US 533840
(71) Applicant: Tradecard Inc., New York 10038, New York (US)
(72) Inventor: Golomb, Kenneth C, Middletown07748, New Jersey (US)
(74) Representative: Luckhurst, Anthony Henry William

(57) **Abstract**

A security system for controlling access to a computer, a software package or a website, or another protected entity, employs two-factor security. A token in the form of a smart card is issued to authorized users. The smart card generates one-time-only access codes on the basis of a fixed secret key and variable input value such as a counter value. A reader device is selectively interfaceable to the smart card to receive the access code generated by the smart card and to display the access code to the user. The user enters the displayed access code into the protected entity, which duplicates the access code generation process carried out in the smart card to validate the entered access code.

## Description

### BACKGROUND OF THE INVENTION

The present invention is concerned with computer-based security devices, and is more particularly concerned with devices for generating one-time-only access codes.

It is well known to provide security for an entity such as a computer, a software package, a web page, a computer network, a locked room or building, etc., by requiring a user to enter a pre-determined password to obtain access. However, even when separate passwords are issued to each individual, and entry of the password assigned to the individual, along with entry of the individual's identity, is required to obtain access, the security provided by such a system is often rather easy to compromise. Even if passwords are changed frequently, it may not be very difficult for a malefactor to obtain knowledge of a user's password. Often this may occur because the user has written down his password on a piece of paper to avoid burdening his memory with the password. An alternative expedient often reverted to by holders of passwords is to use the same password for access to many different entities. The danger of this practice should be evident, since the proprietor of one entity (or its employees), having knowledge of the user's password for that entity, may then experiment with this password while masquerading as the user in attempting to obtain access to other entities.

In short, so-called "one factor" security systems, in which the security is based upon "what the user knows", are often deemed inadequate.

So-called "two-factor" security systems are generally considered more secure than one-factor systems. The second factor constitutes limiting access to users who hold a particular "token", often a machine-readable card, such as a magnetic stripe card or smart card. The user who desires to gain access must have the appropriate password (first factor) and must also be in possession of an appropriate token (second factor). Thus the most common two-factor security system depends both on what the user knows and what the user has in his possession. This presents the malefactor with the dual challenges of learning what an authorized user knows and stealing an item that the user has. As a result, the degree of security provided by the system is greatly enhanced.

One major disadvantage of two-factor security systems is added cost. When a magnetic stripe card, or a smart card, is used as the security token in such systems, it is usually necessary to interface a device for reading such cards to the protected entity. This may be completely impractical when the entity to be secured is a website and the prospective users are very numerous and are expected to access the site through their own geographically-dispersed personal computers. Even when the number of prospective users is limited, and the locations at which the tokens are to be presented are known, the cost of installing reading devices at those locations, and interfacing them to the computer or entity to be protected, is significant.

Certain proposals have been made that somewhat ameliorate the cost of providing secure access via physical tokens. For example, U.S. Patent No. 4,609,777, issued to Cargile, discloses a compact device that includes a numeric display and contains circuitry for generating an access code that changes each time the device is used. According to Cargile's disclosure, the access code or password is calculated from a permanently stored secret key number and a periodically changing number that is representative of the current time. The resulting access code is displayed on the numeric display, read by the user and entered by the user into a keyboard that is interfaced to a computer. The computer stores the same secret key number and maintains the same real time tracking system, so that the access code can be verified by a duplicate process carried on in the computer. Upon verification of the access code, the user is granted access to a software program.

Devices that embody principles of the Cargile patent have been put into practical use and are commercially available. However, the cost of the tokens per user is quite high (in the range of $50 to $80 per user or more). Consequently, the expense of providing non-machine-readable tokens for each user remains a deterrent to widespread use of two-factor or token-based security systems.

### OBJECTS AND SUMMARY OF THE INVENTION

It is accordingly an object of the invention to provide a two-factor security system that is substantially less expensive than prior systems.

It is a further object of the invention to provide a low-cost secure access token that is usable at locations that lack installed and connected token-reading devices.

It is still a further object of the invention to provide a two-factor security system that utilizes only off-the-shelf hardware.

According to an aspect of the invention, token access security is provided via a combination of a smart card and a smart card reader, where the smart card reader includes a display, the smart card is programmed to calculate a password from a fixed input and a variable input and to transmit the password to the smart card reader, and the smart card reader is arranged to display the transmitted password.

A practical embodiment of this aspect of the invention utilizes a standard smart card, suitably programmed in accordance with the invention, and a small-hand-held "value checker" device that is also a standard item and is compatible with the smart card. The "value checker" is programmed in accordance with the invention to function as a card reader, and is driven by instructions received from the smart card, to display a one-time-only password or access code calculated by the smart card. With this embodiment of the invention, the cost per user for token-based security is driven down to about one-tenth the cost of prior security tokens that display one-time-only access codes.

According to another aspect of the invention, a method of providing limited access to a protected entity includes the steps of interfacing a first device to a second device, using the first device to calculate the password from a fixed input and a variable input, transmitting the calculated password from the first device to the second device, using the second device to display the transmitted password, and using an input device to input the displayed password into the protected entity. As previously indicated herein, the first device may be a smart card, the second device may be a smart card reader, and the input device may be a computer keyboard, a touch screen, or any other peripheral device by which numeric (and/or alphabetic) information may be entered into a computer. The protected entity may be any one of a computer (including personal and laptop computers or "information appliances" generally), a software package, a computer network, or a web site. The protected entity may also be a computer controlled lock or a door, a burglar alarm system, a building, a cupboard, a safe or lock box, and so forth. In a preferred embodiment of the invention, the protected entity is a website maintained on a server computer for the purpose of providing a full service trade system of the type disclosed in U.S. Patent No. 5,717,984, commonly assigned with the present application; and the input device is the keyboard of a personal computer used to access the trade system website.

According to still another aspect of the invention, an apparatus for providing limited access to a protected entity may include a password device for calculating a password from a fixed input and a variable input, a display device, physically separate from and selectively interfaceable to the password device, for receiving the password from the password device and for displaying the received password, and an input device connected to the protected entity for entering the displayed password into the protected entity. It will be understood that the password device may be a smart card, the display device may be a reader for such a smart card where the reader includes a liquid crystal display or the like, and the input device, as before, may be a computer keyboard or other peripheral by which numeric and/or alphabetic information may be entered into a computer. Some of the types of "protected entities" for which security may be provided by this aspect of the invention have been referred to above.

Since the present invention can be implemented using standard, highly compact and low-cost components, the incremental hardware cost per user can be driven down to well under $10. Thus the cost of a token plus portable reader becomes a rather small fraction of the cost of acquiring a customer, so that token-based and/or two-factor security systems become highly affordable even for systems that include a large number of access points. Consequently, the present invention largely or completely removes any economic barrier from virtually universal use of token-based and two-factor security systems.

According to still a further aspect of the invention, a smart card reader is operated by the steps of receiving command messages from a smart card, where the command messages specify commands to be performed by the smart card reader, and the smart card reader performs the specified functions in accordance with the received command messages. The latter aspect of the invention departs from conventional practices in which the smart card is the slave device and the smart card reader is the master device. This aspect of the invention is conducive to the low-cost token-based security system provided in accordance with the aspects of the invention that have heretofore been described, and is especially advantageous in that smart cards that are used as security tokens can also be used for other purposes.

The above, and other objects, features and advantages of the present invention will be apparent in the following detailed description of the preferred embodiments of the invention when read in conjunction with the accompanying drawings in which corresponding parts are identified by the same reference symbol.

### BRIEF DESCRIPTION OF THE DRAWINGS

Fig. 1 provides a schematic overview of the token-based security system of the present invention.
Fig. 2 is a simplified block diagram of a smart card that is part of the security system of Fig. 1.
Fig. 3 is a simplified block diagram of a smart card reader that is part of the security system of Fig. 1.
Fig. 4 is a flow diagram that illustrates the process and data flows among the smart card, the reader and the protected entity that are components of the security system of the present invention.
Fig. 5 is a diagrammatic illustration of a process carried out in the smart card for generating an access code.
Fig. 6 is a flow chart that illustrates a process carried out by the protected entity to verify an access code that has been entered into the protected entity.

### DETAILED DESCRIPTION OF PREFERRED EMBODIMENTS

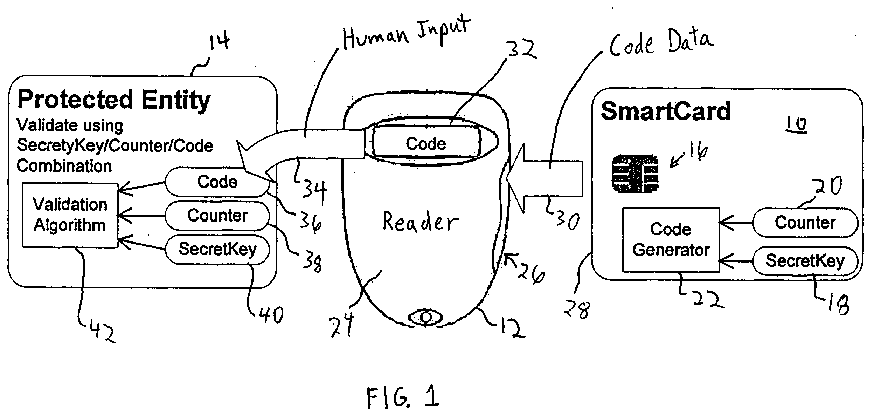

Fig. 1 presents a schematic overview of a preferred embodiment of the invention. There are three primary constituent elements of the security system of the present invention. These are a smart card 10, a smart card reader 12, and a protected entity 14, which is the computer or other electronic device, software package, web page, lock or other entity for which access is to be secured by the system of the present invention.

The smart card 10 is preferably a conventional, commercially-available item such as the "BasicCard" available from ZeitControl cardsystems GmbH, Minden, Germany. The circuitry included in the smart card 10 will be described in more detail below. As seen from Fig. 1, the smart card 10 includes contacts 16 that are arranged to permit a reader device to interface to the smart card for data communications with the circuitry of the smart card 10. The contacts 16 also permit power to be applied from an external device to the circuitry of smart card 10.

Major functions performed by the smart card 10 are illustrated by blocks 18, 20, 22 shown in Fig. 1. Block 18 represents a secret key, which is a multi-digit number or character string permanently stored in the smart card 10. Block 20 represents a counter that is incremented each time an access code is generated, so that the counter functions as a variable input for a code-generation process. The code-generation process itself is represented by block 22 and takes the secret key 18 as a fixed input and the current value of the counter 20 as a variable input. Details of a preferred code-generation process will be described below.

The smart card reader 12 also preferably is a conventional, commercially-available item, such as the model ST-X reader available from Securitech, Rolling Hills Estates, California. In this preferred embodiment, the reader 12 includes a compact housing 24 in which a slot 26 is formed at one side. The housing 24 is of a shape and size to fit comfortably in the palm of a user's hand. It should be noted that, in Fig. 1, the reader 12 and the smart card 10 are presented in somewhat different scales. In a preferred embodiment of the invention, the slot 26 is large enough to accommodate a leading end 28 of the smart card 10, so that the end 28 of the smart card 10 may be inserted into the slot 26 to permit the contacts 16 of the smart card 10 to mate with contacts (not shown in Fig. 1) of reader 12. The contacts of reader 12 are within the housing 24 and adjacent the slot 26.

Arrow 30 in Fig. 1 represents the transmission from smart card 10 to reader 12 of an access code generated by the code-generation function 22 of smart card 10. It will be appreciated that the transmission of the access code (which is sometimes also referred to as a password) is via the respective contacts of the smart card 10 and the reader 12, of which only contacts 16 of the reader 10 are shown in Fig. 1. The arrow 30 may also be taken to represent insertion of the leading end 28 of smart card 10 into the slot 26 of reader 12.

The reader 12 has a display 32 mounted in its housing 24. The display 32 is a liquid crystal display (LCD) or other display that is suitable for displaying numerals and/or alphabetic characters. A key function of the reader 12 is to display on the display 32 the access code generated by the smart card 10 and transmitted from the smart card 10 to the reader 12.

Arrow 34 in Fig. 1 represents activities of the individual user of the smart card 10 and reader 12. In particular, these activities include reading the access code displayed on the display 32 of the reader 12 and entering the displayed code into the protected entity 14. A typical way in which the code might be entered is via the keyboard of a computer which is itself the protected entity or which is used to access or utilize a software package, a web page, a computer network, or another computer resource. Other input devices that may be connected to the protected entity and used to enter the access code include a touch-screen, a voice-based input device, and a pen-based input device.

Blocks 36-42, associated with the protected entity 14 in Fig. 1, represent functions performed by the protected entity 14 to validate the access code entered by the user. Specifically, block 36 represents the access code entered by the user into the protected entity 14. Block 38 represents a counter that is stored in the protected entity 14 for the individual who holds a smart card 10, and that is intended to reflect the value of the counter 20 of the smart card 10. Block 40 represents the secret key stored in the protected entity 14 for the holder of the smart card 10. The secret key 40 stored in the protected entity 14 for the user in question is the same as the secret key 18 stored in the user's smart card 10.

A validation algorithm that operates on the data represented by blocks 36, 38 and 40 is represented by block 42. Essentially the validation algorithm 42 applies the same code-generation function as that represented by block 22 of smart card 10 to the current value of the counter 38 and the secret key 40. The result of this process is then compared to the code 36 that was entered into the protected entity 14 by the user. The access code is validated if it matches the result of applying the code-generation process to the value of counter 38 and the secret key 40. Because of the possibility of de-synchronization between the counter 38 and protected entity 14 and the counter 20 in smart card 10, if the validation algorithm 42 initially does not validate the code, the algorithm is iterated using incremented values of the counter 38 within a predetermined window to determine whether any value of the counter within the window yields a result that matches the entered access code 36. Additional details of the validation algorithm 42 will be described below.

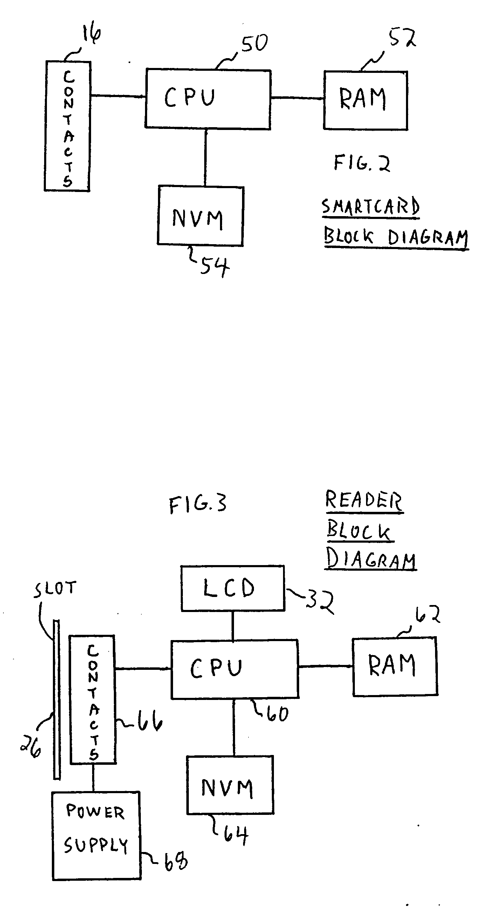

Fig. 2 is a simplified block-diagram representation of circuitry included in the smart card 10. A preferred embodiment of the smart card 10 includes a programmable processor or CPU 50. The preferred commercially-available smart card referred to above is programmable in the Basic programming language, but it is also contemplated to use smart cards programmable in other languages, including Java. Moreover, a smart card 10 that includes custom circuitry such as an application specific integrated circuit (ASIC) to perform the functions of CPU 50 may also be employed.

Connected to the CPU 50 are random access memory (RAM) 52, a nonvolatile memory 54, and the contacts 16 previously referred to in connection with Fig. 1. The RAM 52 serves as working memory for the CPU 50. The nonvolatile memory 54 provides program storage for the software which controls CPU 50. NVM 54 also stores values such as the secret key 18 (Fig. 1) and the current value of the counter 20. Contacts 16 are connected to the CPU 50 via suitable buffering and/or interface circuits, which are not shown. It was noted above that the contacts 16 may also be arranged to receive power for the circuitry of the smart card. Connections for applying the power from the contacts to the various electronic components of the smart card are omitted to simplify the drawing.

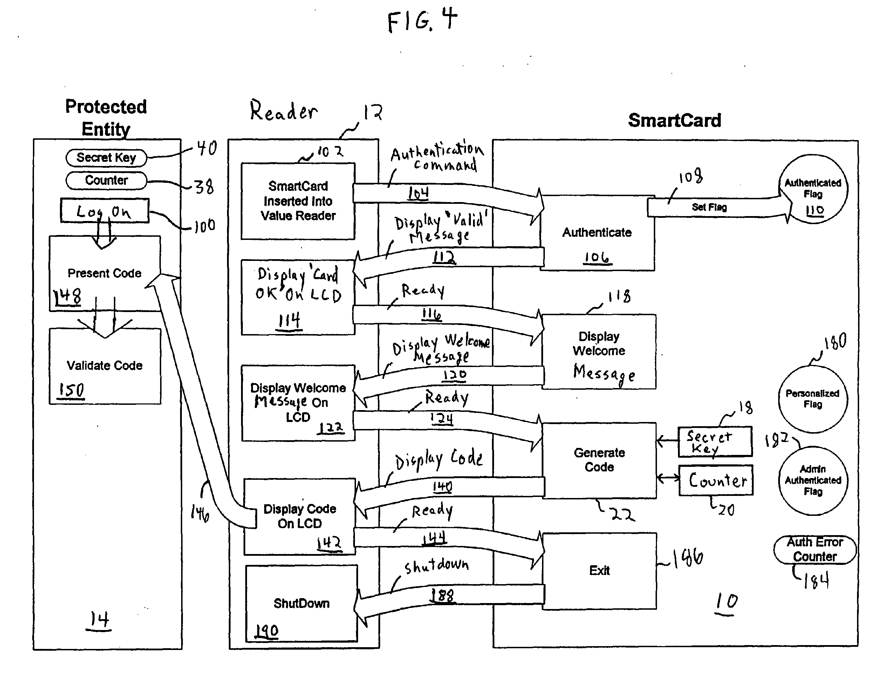

Fig. 3 is a simplified schematic block-diagram of electronic components of the reader 12. The reader 12 includes a CPU 60, to which are connected RAM 62, nonvolatile memory 64, contacts 66, and the above-mentioned display 32 (Fig. 1). The CPU 60 need not be of the same type as the CPU 50. Also, suitable custom circuitry (ASIC) may alternatively be provided to perform the functions of the CPU 60. The RAM 62 serves as working memory, and the nonvolatile memory 64 stores a program for controlling the CPU 60. Although no counter value or secret key is stored in the reader 12, the NVM 64 preferably stores authentication or unit identifying data that is unique either to the particular reader or to the issuer of the reader.

The contacts 66 are those referred to above in connection with Fig. 1 (although not shown therein) and are provided to mate with the contacts 16 of a smart card inserted into the slot 26. Contacts 66 are shown in Fig. 3, somewhat schematically, as being adjacent to the slot 26. Also included in the reader is a power supply 68, such as a battery. The power supply 68 is shown as being connected to the contacts 66 so as to power a smart card inserted into the slot 26. Omitted from Fig. 3, for the sake of simplicity, are connections supplying power from the power supply 68 to electronic components of the reader.

Fig. 4 illustrates operation of the present invention in terms of interactions among the smart card 10, the reader 12 and the protected entity 14. The various blocks and arrows shown in Fig. 4 generally represent processes carried on by the smart card, the reader, and/or the protected entity and as such are illustrative of software provided in accordance with the invention to control the smart card, the reader and the protected entity.

Block 100 in Fig. 4 represents a log-on step that may be performed initially as part of a process of gaining access to the protected entity. Alternatively, the log-on step may be deferred until after the access code has been generated by means of the smart card 10 and the reader 12. In any event, in accordance with conventional practice, the log-on step 10 may include the user entering his or her name or other identifying information, and may also require the user to enter a password that is known to the user and is not generated via the smart card. It should be understood that if the protected entity is a relatively simple device such as a door-lock, then it may not be necessary for the user to log on, and step 100 may be omitted.

Block 102 represents inserting the smart card 10 into the slot 26 of the reader 12, which initiates the procedure for generating the access code. When this occurs and the contacts 16 of the smart card 10 have mated with the contacts 66 of the reader 12, power is applied from the reader to the electronic components of the smart card so that the smart card becomes active. In addition, the reader 12 detects that the smart card has been inserted therein, and the reader accordingly enters into an active state. Then, in accordance with a preferred embodiment of the invention, the smart card 12 sends an authentication command 104 to the smart card 10. The authentication command 104 includes an authentication code. The authentication code may be unique to the pair of smart card 10 and reader 12. Alternatively, and in accordance with a preferred embodiment of the invention, the authentication code is unique to the issuer of the smart code 10 and the reader 12, and is stored in all of the smart cards and readers issued by the issuing company.

Block 106 in Fig. 4 represents a process step in which the smart card determines whether the reader is authorized to interact with the smart card. The process of step 106 may be as simple as determining whether an authentication code included in the authentication command 104 matches the authentication code that has been stored in smart card. If so, then the smart card takes an action, indicated at 108, to set a flag 110 to indicate that the smart card is in an authenticated state. Preferably the smart card is arranged such that it will not operate to generate an access code unless the authenticated flag has been set.

If the authentication process of block 106 fails, then the smart card sends an appropriate command to the reader to cause the reader to display a suitable error message. (The actions taken upon failure of the authentication procedure are not shown in the drawing.) However, assuming that the authentication procedure has been performed successfully, then the smart card sends a command message 112 to the reader 12. The command message 112 instructs the reader 12 to display a message that indicates successful completion of the authentication process in the smart card 10. The reader 12 receives this message, and in accordance with the message, displays suitable information on the LCD 32. For example, the message "Card OK" may be displayed. The step of displaying this message is indicated by block 114. The reader 12 then transmits to the smart card 10 a message 116 to indicate that the reader 12 is ready to receive another command. Upon receiving the message 116 the smart card advances to a step 118 at which it formulates a message 120 to be sent to the reader 12. The message 120 is a command message that instructs the reader 12 to display a suitable welcome message on the display 32. Block 122 represents the reader receiving the message 120 and displaying the welcome message in accordance with the command message 120. The reader 12 then transmits a ready message 124 to the smart card 10. Upon the receiving the ready message 124 the smart card 10 proceeds to generate an access code on the basis of the secret key 18 and the current value of the counter 20. The secret key 18 constitutes a fixed input to the code generation process and the counter value constitutes a variable input, inasmuch as the counter value changes from time to time. (It should be noted that the code generation step 22 need not wait until receipt of the ready message 124, but rather may be commenced any time after successful completion of the authentication process represented by block 106.)

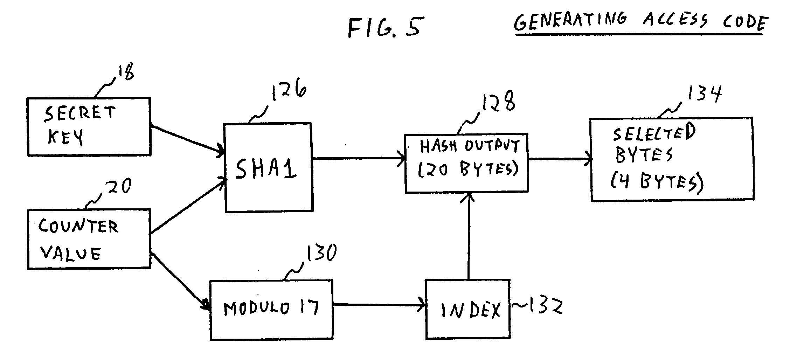

Details of the code generation process, which is represented by block 22 in Fig. 4, will now be described with reference to Fig. 5. Fig. 5 is a flow diagram that represents constituent steps of the access code generation process. As before, secret key 18 and the current value of the counter (reference numeral 20) are taken as input values. These input values are processed in accordance with a standard hashing algorithm known as SHA1, represented by block 126 in Fig. 5.

The secret key 18 is preferably a 16 byte hexadecimal or binary-coded-decimal number that has been randomly generated and stored both in the smart card 10 and in the protected entity 14. In accordance with conventional practice, it is preferred that the secret key be stored in a secured memory within the smart card. This memory is of a type that is not accessible for reading from outside of the smart card. Moreover, the secured memory is of a type that cannot be changed, i.e., it is a "write-once-read-many" memory.

The counter 120 is preferably also initially set as a randomly generated 16 byte word. However, the counter is stored in a rewritable memory in the smartcard and is incremented each time the counter value is used to generate an access code. The same initial counter value is also stored together with the secret key in the protected entity, and is incremented each time the protected entity determines the validity of an entered access code.

Continuing to refer to Fig. 5, the hashing algorithm represented by block 126 is preferably a standard one-way hashing algorithm such as the well-known algorithm referred to as "SHA1". Other similar functions, such as the MD5 function may be used. These algorithms are "one-way" in the sense that the input values cannot be recovered on the basis of the output value. The output from the hashing algorithm 126 is in the form of a 20 byte word and is represented by block 128 in Fig. 5.

A modulo 17 function, represented by block 130, is applied to the same counter value that was used as an input to the hashing algorithm 126. The resulting index i is in the range 0-16, and is represented by block 132. The index i is applied to the 20 byte hash output 128 to select 4 bytes (block 134). These selected four bytes constitute an 8-digit access code which is the output of the code generation process. The index i is used to select the ith, (i+1th), (i+2th), and (i+3th) bytes of the hash output as the selected bytes 134.

It should be understood that many other processes may be used to select four bytes from the 20 byte hash output. For example, a modulo 21 function may be applied to the counter value, and if the resulting index is a relatively high number (i.e. close to 20) the selection may wrap around to the beginning of the hash output. As other alternatives, fixed truncation schemes may be applied to front- or back-end truncate or middle-truncate the hash output to four bytes. As another alternative, four selected, possibly non-adjacent bytes of the hash output may be used. The 8-digit access code may be a hexadecimal or binary-coded-digital number.

Those who are skilled in the art will recognize that there are many possible variations on, or alternatives to, the access code generation procedure which has just been described. Among those variations are changes in the number of digits in one or both of the secret key 18 and the counter 20. It is also contemplated to use a time and/or date based variable input instead of the value of counter 20. Other types of variable inputs may also be used, including a list of random numbers.

Referring once again to Fig. 4, upon completion of the process for generating the access code, the smart card 10 transmits a command message 140 to the reader 12. At the same time, the smart card 10 increments the value of the counter 20.

The command message 140 includes the access code generated by the smart card 10 and instructs the reader 12 to display the access code on its LCD 32. Upon receiving the command message 140, the reader 12 responds by displaying the access code (8 digits in a preferred embodiment) in accordance with the command message 140, as indicated at block 142. The reader 12 also sends a ready message 144 to the smart card 10.

The arrow 146 in Fig. 4 (like arrow 34 in Fig. 1) represents activity by the individual who is using the smart card 10 and the reader 12. This activity consists of reading the 8-digit access code displayed on the LCD 32 of the reader 12, and entering the code (block 148) into the protected entity 14. The protected entity then proceeds to validate the entered code, as represented by block 150.

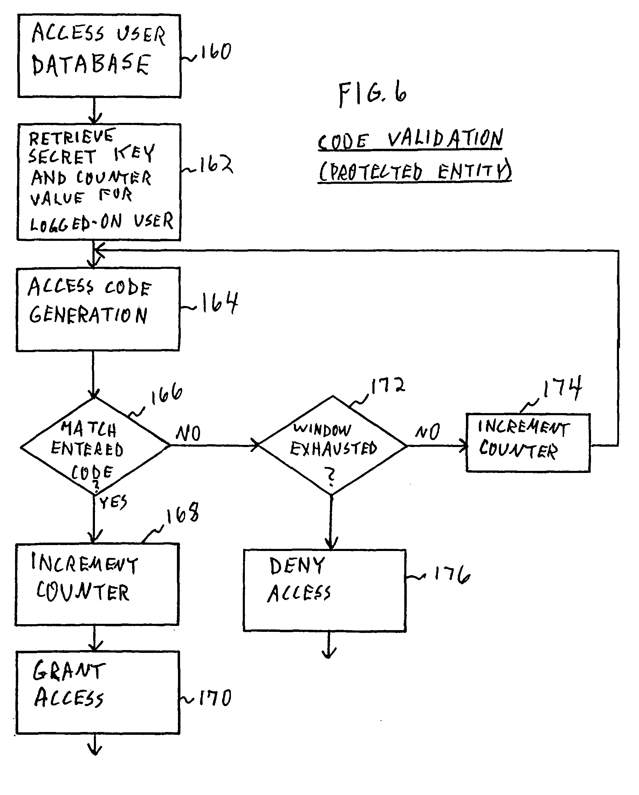

Details of the code validation process are illustrated in Fig. 6 in the form of a flowchart. A first block 160 in Fig. 6 represents the protected entity accessing a database of authorized users. Then, at block 162, the protected entity uses the user identification data, which was entered at block 100 (Fig. 4), to retrieve the corresponding secret key and the current counter value for the user who logged in at block 100.

Continuing to refer to Fig. 6, block 164 represents a process of generating an access code from the secret key and counter value retrieved at block 162. The process of block 164 is the same as the access code generation process that was performed by the smart card 10 and was described in connection with Fig. 5. Accordingly, the protected entity emulates the code generation function of the smart card. Assuming that the secret key and counter value inputs are the same for the process performed by the protected entity as the secret key and counter value used by the smart card 10 at block 22 (Fig. 4), the output from the process of block 164, namely the emulated access code, will match the access code generated by the smart card 10 and entered into the protected entity by the user. A decision block 166 follows block 164 and represents a determination as to whether the emulated access code generated at block 164 matches the entered access code. If a positive determination is made, then the counter value for the logged-on user is incremented and stored in the user database (step 168), and access to the protected entity is granted (step 170).

If at block 166 it was found that the access code generated by the protected entity does not match the access code entered by the user, then the protected entity repeats the access code generation process for a number of subsequent counter values within a predetermined window. This process is represented by a loop consisting of decision block 172, step 174 and previously-described blocks 164 and 166. The purpose of having a window of counter values is to provide for the possibility that the counter in the smart card 10 may be de-synchronized from the counter in the protected entity 14. This could happen, for example, if the user causes the smart card to generate an access code which is not entered into the protected entity. In a preferred embodiment of invention, the number of counter values in the window is 100. However, the window may be made larger or smaller. The chosen size of the window represents a trade-off between the degree of security provided and avoidance of inconvenience to the user. A smaller window increases the degree of security but also increases that the chance that the user will be inconvenienced.

If the window of counter values is exhausted without the access code generation step 164 producing a code which matches the entered access code, then access to the protected entity is denied, as indicated by step 176. Of course, if the access code generation at step 164 does match the entered access code for any counter value in the window, then steps 168 and 170 are performed, including granting access to the protected entity.

Referring again to Fig. 4, it will be recalled that the reader 12 transmitted a ready message 144 to the smart card 10 at the time the reader displayed the authentication code received from the smart card 10. In response to the ready message 144, the smart card 10 (at step 186) exits from its access code process and transmits a command message 188 to the reader 12 to instruct the reader 12 to shut down. The reader then does so as indicated at 190.

Other features of the smart card 10 will also now be described with reference to Fig. 4.

The smart card 10 stores a flag 180 to indicate that the smart card 10 has been "personalized". The smart card is "personalized" by storing the unique secret key 18 and initializing (to a random value) the counter 20. It will be understood from previous discussion that the same values are stored in the user database of the protected entity 14 in conjunction with the process for personalizing the smart card 10. Personalization may also include storing in the smart card data that identifies the authorized holder of the smart card. When personalization of the smart card is complete, the "personalized" flag 180 is set. Unless the flag 180 is set, the smart card will not function to produce an access code.

The flag 182 shown in Fig. 4 is a flag that is similar in function to flag 110, but is used in connection with a process in which the smart card 24 is accessed for administrative purposes such as personalizing the smart card 10. The administrative authenticated flag 182 is set only when an administrative authentication code is transmitted to the smart card 10 and that code matches a corresponding code that has been previously stored in the smart card 10. Only when the administrative authenticated flag 182 is set may administrative procedures such as personalization take place. A counter 184 is also maintained in the smart card 10 to keep track of attempts to set the authenticated flag 110 or the administrative authenticated flag 182. If a permissible number of unsuccessful attempts is exceeded, then the smart card 10 is disabled.

The system and processes described above and provided in accordance with the invention make it possible to employ either a token-based or two-factor security system at a very affordable per-user cost. Since very inexpensive standard devices may be used to constitute both the smart card 10 and the value checker 12, hardware costs are minimized. Moreover, the security system of the present invention allows secure access to be provided via access points that lack a reader device that is capable of reading security tokens. This system is ideal for securing an entity, such as a website or an ASP (application service provider), that is to be accessed via numerous subscribers' computers, because the subscribers do not have to have readers interfaced to their computers.

Although it is preferred to require entry of a user-password for access to the protected entity in addition to the smart-card-generated access code, it is within the contemplation of the invention to omit the user password, thus providing a token-only security system rather than a two-factor security system.

It has previously been noted that the protected entity for which access is secured by the system of the present invention may be a computer, software package, a website, a computer network, or a doorlock. Other locks that may be selectively unlocked by the process of the present invention may be for an automobile or other vehicle, a television set, a gun or other weapon system, a safe or lockbox, a drug cabinet or other secured storage area, or even a small portable container such as a pill bottle.

It is also contemplated to secure automatic teller machines (ATM's) using the system of the present invention. The same portable smart card reader used as the value checker according to the preferred embodiment of the invention may simply be glued or otherwise mounted adjacent to the ATM touch screen or keyboard. If such a reader device happened to be dislodged, lost, stolen or broken, it could be readily replaced by an identical item, at very low cost. Thus an entire network of ATM's could be retrofitted with an improved security system at minimal cost in terms of hardware, issuance of user tokens, and programming.

It will be recalled from the discussion of Fig. 4 that the reader 12 is programmed to perform many of its functions in response to command messages transmitted to the reader from the smart card 10. This departs from conventional practices in which the reader simply retrieves a value from a memory location in the smart card or drives the smart card to perform certain functions. It is a useful, but not essential, aspect of the present invention that the reader is driven by commands from the smart card, so that the reader may in effect be re-programmed by reprogramming or replacing the smart card to change the commands transmitted to the readers. One possible application of this aspect of the invention would be to employ the smart cards for other purposes, such as storing monetary value, in addition to generating access codes for the security systems described hereinabove. It should be recognized that most of the benefits of the present invention can also be realized by using a reader that is not programmed to be driven by the smart card, and the present invention contemplates using such a reader.

In the preferred embodiment of the invention as described herein, a standard smart card is employed to generate a one-time-only access code or password from a fixed input and a variable input. Thus the smart card functions as a password device. It is within the contemplation of the invention that other types of devices besides smart cards be used to generate the password, provided only that such devices be interfaceable to a separate device which is capable of receiving and displaying the password generated by the password device.

Similarly, the preferred embodiment disclosed herein calls for a display device in the form of an off-the-shelf, hand-held smart card reader that receives and displays the one-time-only password generated by the password device. It is again contemplated to use other types of devices as the display device, the only requirements being that the display device be selectively interfaceable to the password device, capable of receiving and displaying the one-time-only password generated by the password device, and contained in a housing that is separate from the password device. The display device may be much larger than the hand-held reader shown in the drawings. For example, the display device may be permanently mounted in a large console.

In the above-described preferred embodiment of the invention, the data path between the smart card serving as the password device and the reader serving as the display device is formed by direct electrical connection between the two devices. However, the interface between the two devices may take other forms, including wireless data communication such as infra-red transmission, and proximity interfacing such as inductive coupling.

Although an illustrative embodiment of the present invention, and various modifications thereof, have been described in detail herein with reference to the accompanying drawings, it is to be understood that the invention is not limited to this precise embodiment and the described modifications, and that various changes and further modifications may be effected therein by one skilled in the art without departing from the scope or spirit of the invention as defined in the appended claims.

## Claims

1. Apparatus for providing limited access to a protected entity, comprising:
password means for calculating a password from a fixed input and a variable input;
display means, physically separate from and selectively interfaceable to said password means, for receiving the password from the password means and for displaying the received password; and
input means connected to the protected entity for entering the displayed password into the protected entity.

2. Apparatus according to claim 1, wherein the password means is a smart card and the display means is a smart card reading device.

3. Apparatus according to claim 2, wherein the smart card reading device is shaped and sized to fit in a user's hand.

4. Apparatus according to claim 1 or claim 3, wherein the input means includes a keyboard.

5. Apparatus according to claim 1 or claim 4, wherein the protected entity includes a computer.

6. Apparatus according to claim 5, wherein the computer includes means for emulating the password claculation performed by the password means.

7. A method of providing limited access to a protected entity, the method comprising the steps of:
interfacing a first device to a second device;
using the first device to calculate a password from a fixed input and a variable input;
transmitting the calculated password from the first device to the second device;
using the second device to display the transmitted password; and
using an input device to input the displayed password into the protected entity.

8. A method according to claim 7, wherein said interfacing step is performed before said step of using the first device to calculate the password.

9. A method according to claim 7, wherein said interfacing step includes inserting said first device into a slot in said second device.

10. A method according to claim 7, wherein said step of using an input device includes entering the displayed password via a keyboard.

11. The combination of a smart card and a smart card reader, the smart card reader including a display, the smart card being programmed to calculate a password from a fixed input and a variable input and to transmit the password to the smart card reader, the smart card reader being arranged to display the transmitted password.

12. The combination of claim 11, wherein the smart card reader includes a housing having a slot for receiving at least a portion of the smart card.

13. A smart card reader, comprising:
a processor;
a memory connected to the processor;
a display connected to the processor; and
interface means, connected to the processor, for exchanging data messages with a smart card;
the processor being programmed to:
receive command messages from the smart card, the command messages specifying functions to be performed by the processor;
and perform the specified functions in accordance with the received command messages.

14. A smart card reader according to claim 13, further comprising a housing in which the processor, the memory, the display and the interface means are contained; the housing including a slot for receiving at least a portion of the smart card, the interface means including contacts adjacent the slot for mating with contacts on the smart card.

15. A smart card reader according to claim 14, wherein the housing is shaped and sized to fit in a user's hand.

16. A smart card reader according to claim 13, wherein the processor is programmed to transmit ready messages to the smart card after performing said functions.

17. The combination of a smart card and a smart card reader, the smart card being programmed to transmit command messages to the smart card reader, the command messages specifying functions to be performed by the smart card reader, the smart card reader being programmed to receive the command messages and to perform the specified functions in accordance with the received command messages.

18. The combination of claim 17, wherein the smart card reader is programmed to transmit ready messages to the smart card after performing the specified functions.

19. A method of operating a smart card reader, the method comprising the steps of:
receiving command messages from a smart card, the command messages specifying functions to be performed by the smart card reader; and
performing the specified functions in accordance with the received command messages.

20. A method according to claim 19, further comprising the step of sending ready messages to the smart card after performing the specified functions.
